Europäisches Patentamt

European Patent Office

Office européen des brevets

(19)

(11) Publication number : **0 193 962**
**B1**

(12) **EUROPEAN PATENT SPECIFICATION**

(45) Date of publication of patent specification :
11.01.89

(21) Application number : **86103003.9**

(22) Date of filing : **06.03.86**

(51) Int. Cl.⁴ : **G 03 B 27/60**, G 03 B 27/64

(54) **A rotary suction drum.**

(30) Priority : 07.03.85 JP 46075/85
04.09.85 JP 195290/85

(43) Date of publication of application :
10.09.86 Bulletin 86/37

(45) Publication of the grant of the patent :
11.01.89 Bulletin 89/02

(84) Designated contracting states :
**DE FR GB**

(56) References cited :
EP--A-- 0 078 376
DD--A-- 221 897
DE--B-- 1 276 688

(73) Proprietor : **Dainippon Screen Mfg. Co., Ltd.**
**1-1, Tenjinkitamachi Teranouchi-agaru 4-chome Hori-**
**kawa-dori**
**Kamikyo-ku Kyoto 602 (JP)**

(72) Inventor : **Fujii, Teruo**
**16-10 Goshonouchi-cho Matsugasaki**
**Sakyo-ku Kyoto (JP)**

(74) Representative : **Goddar, Heinz J., Dr. et al**
**FORRESTER & BOEHMERT Widenmayerstrasse 4/I**
**D-8000 München 22 (DE)**

EP 0 193 962 B1

## Description

This invention relates to a rotary drum for securing a sheet material thereon under suction, and more particularly to such a rotary drum for use in combination with a photographic recording apparatus.

A rotary suction drum which is used to secure a photosensitive material, is known in the art. Such drums are mainly employed in combination with a recording apparatus. The drum of this kind comprises a hollow cylinder, the surface of which is provided with perforations in the form of fine holes, the cylinder being rotatably driven and communicating with a suction unit. A sheet material placed on the cylinder surface is secured by suction through the holes in the cylinder surface.

Recently, in line with the increasing size of sheet material dealt with, the size of such rotary drums has increased. However, it is still often necessary to record on a half-size photosensitive material, because in some situations it is disadvantageous to use a full-size photosensitive material.

To secure such half-size photosensitive material on the cylinder surface, current practice comprises mounting the half-size photosensitive material on the cylinder surface, and simultaneously covering the excess area of the cylinder surface (i. e. the area not covered by the half-size photosensitive material) with another sheet material, such as used film, which is fastened to the cylinder surface by means of adhesive tapes, whilst the half-size photosensitive material is fixedly held on the cylinder surface by suction. However, this practice is labor-consuming and remnants of the adhesive are likely to be left on the cylinder surface, which causes trouble in later use of the rotary drum.

There has been proposed an improvement of the rotary drum, which is shown in Japanese Laid-Open Utility Model Publication No. 59-141344, and an explanation of the improvement proposed in this Publication will now be given with reference to Figure 8 of the accompanying drawings. A rotary drum 51 comprises a number of fine holes 52 on the surface thereof, and walls 53, 54 which define four chambers inside the durm 51. Each chamber communicates with a suction pump 55 through conduits 56 in which electromagnetic valves $V_1$, $V_2$ and $V_3$ are respectively provided, which valves are selectively operable to adjust the suction in each of the chambers. Photosensitive materials of various sizes can be effectively mounted on the peripheral surface of this rotary drum.

However, such an improvement still involves some disadvantages, one of which is that the coupling of the conduits 56 to the drum 51 is complicated. Another disadvantage is that the suction rate in the conduits 56 is likely to be reduced because of the fact that the conduits run around the drum. As a result it takes a long time before the differential pressure required fixedly to a photosensitive material on the surface of the drum 51 is obtained. These problems make the operation efficiency poor, and prevent the automatic loading of film on the drum.

The present invention aims to solve or at least reduce the disadvantages pointed out above, and has as an object the provision of a rotary suction drum which effectively secures a sheet material, such as film, on its surface by suction, regardless of the size of the sheet material.

Another object of the present invention is to provide a rotary suction drum having a simplified construction compared with that of the prior art and also to provide a rotary suction drum which is relatively easier to operate.

According to the present invention, there is provided a rotary suction drum for supporting sheet materials of different sizes, comprising a rotary cylinder on the surface of which the sheet material is mounted in use of the suction drum, a wall separating two chambers within the cylinder, a conduit opening into one of the said chambers and connected to suction means for applying suction to the one chamber, characterised by an opening provided in the wall, and a valve selectively operable during rotation of the cylinder to place the chambers in communication or to isolate the chambers from one another depending upon the size of sheet material being used.

In a preferred embodiment, two openings are provided in the wall on opposite sides of the axis of rotation of the cylinder, and respective valves are provided for controlling communication between the chambers through the openings.

Conveniently, each valve is operable to cover the corresponding opening by centrifugal force resulting from rotation of the cylinder and being urged towards the wall to close the corresponding opening in a substantially airtight manner by differential pressure between the two chambers.

Preferably, the rotary cylinder may rotate at different speeds. When the sheet material is being placed on the surface of the cylinder, the cylinder rotates at a comparatively low speed, and after the sheet material is so placed the cylinder rotates at a higher speed. If the sheet material is a film, it is preferred that the higher speed is one at which an image may be recorded on the film.

According to one embodiment of the present invention, the valve provided on the wall comprises a movable plate rotatable or slidable so as to move to a position across the corresponding opening in response to the centrifugal force produced by the rotation of the cylinder. In this case, when the differential pressure is applied to the plate, the opening on the wall is airtightly closed by the plate.

According to another embodiment of the invention, the valve comprises : a first plate, movably mounted on the wall, the first plate having a second opening, smaller in diameter than the corresponding first opening provided in the wall, the second opening corresponding to the opening provided in the wall when the first plate is moved to the position across the first opening ; a second plate provided on the first plate for closing the second opening ; and resilient means provided between the first and second plates, biasing the second plate away from the first plate. The resilient means secures a clearance for the communication between the chambers. When the first plate is moved to the position across the first opening in response to the centrifugal force produced by the rotation of the cylinder, the communication between the chambers is secured by the resilient means which forms the clearance between the first and second plates. In this case, when differential pressure occurs between the chambers, it is applied to the second plate as well as to the first plate, forcing the second plate against the first plate in opposition to the bias of the spring, and forcing the first plate against the wall across the first opening, so that the first and second openings provided on the wall and the first plate, respectively, are airtightly closed.

By way of example only, embodiments of the present invention will be further described with reference to, and as shown in the accompanying drawings, in which.

Figure 1 is a cross-sectional view through a rotary suction drum embodying the present invention ;

Figure 2 is a fragmentary view on a larger scale showing one embodiment of the portion indicated by II in Figure 1 ;

Figure 3 is a fragmentary view on a larger scale showin another embodiment of the portion indicated by II in Figure 1 ;

Figure 4 is a fragmentary view on a larger scale showing a further embodiment of the portion indicated by II in Figure 1 ;

Figure 5 is an exploded view of the portion shown in Figure 4 ;

Figure 6 is yet another embodiment of the portion indicated by II in Figure 1 ;

Figure 7 is an exploded view of the portion shown in Figure 6 ; and

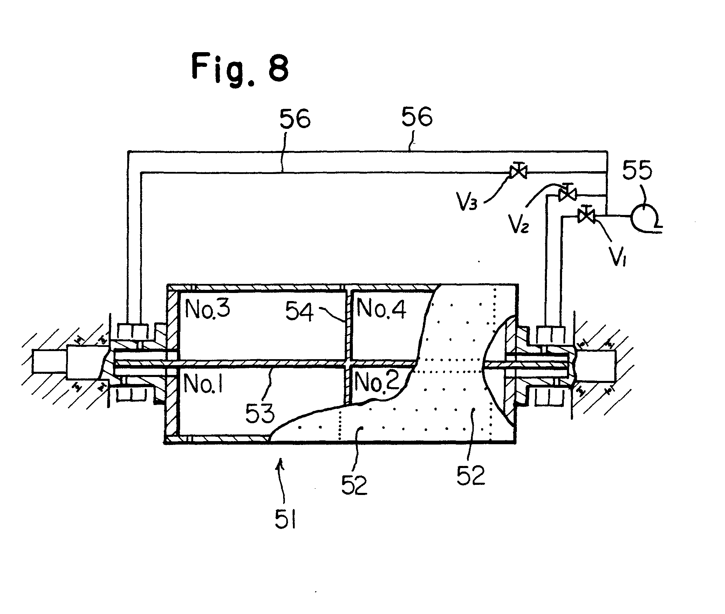

Figure 8 is a cross-sectional view of a conventional rotary drum.

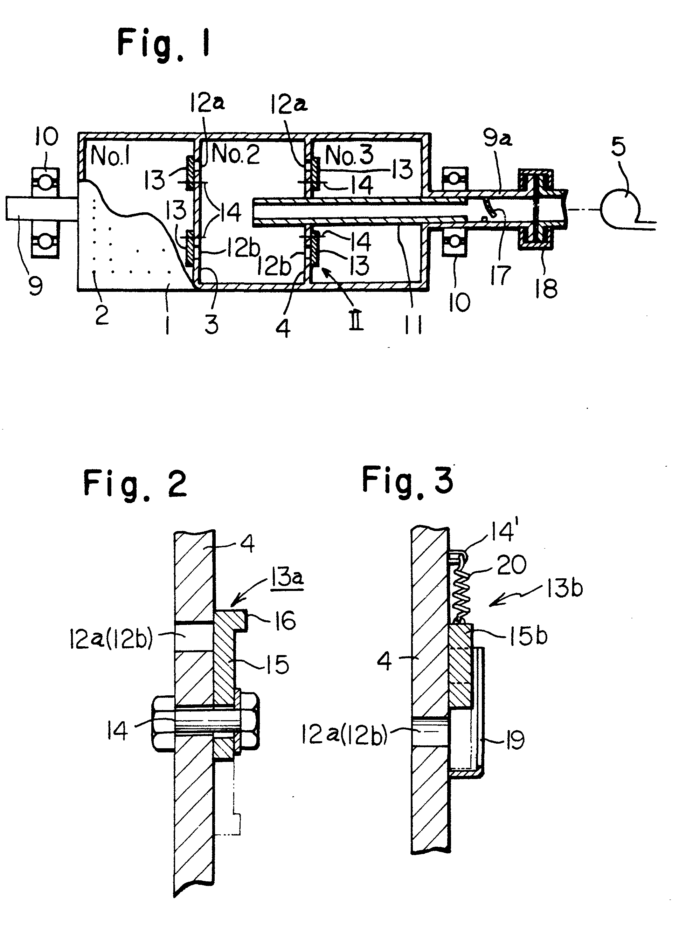

Referring to Figure 1, a hollow rotary cylinder 1 comprises a number of fine suction holes or perforations 2 in its surface. The inside of the cylinder 1 is divided into three chambers, denoted as No. 1, No. 2 and No. 3, by vertical walls 3 and 4, these chambers being aligned along the rotary axis of the cylinder 1.

The cylinder 1 further comprises extended portions 9 and 9a at both opposite ends thereof, whereby the cylinder 1 is carried on bearings 10 in such a manner that the cylinder 1 can rotate at high speeds. A conduit 11 is airtightly connected to a hollow extended portion 9a, and opens in to the middle chamber No. 2 with its other end communicating via the hollow extended portion 9a and opens into the middle chamber No. 2 with its other end communicating via the hollow extended portion 9a with a suction pump or blower 5.

Each vertical wall 3, 4 is provided with openings 12a, 12b which communicate with the neighbouring chambers. Valves 13 are located on the walls adjacent the openings 12a, 12b and are capable of swinging so as to close the openings 12a, 12b. Each valve 13 is pivotally connected to its respective wall 3, 4 by means of a shaft 14, positioned between the openings 12a, 12b and the rotational axis of the cylinder 1. Details of various embodiments of the valve 13 are shown in Figures 2 to 7.

Figure 2 shows a first embodiment of a valve 13a for use in the rotary suction drum of the present invention. In Figure 2 the valve 13a comprises a fan-shaped flat plate 15 which is rotatably mounted on the wall 4 by a shaft 14 extending through the narrow end portion of the plate 15. The plate 15 has a weighted wide end portion 16. The weighted wide end portion 16 is large enough to situate the centre of gravity of the valve 13a away from the shaft 14. When the cylinder 1 is rotated at high speed, the centrifugal force acts on the plates 15 forcing them to swing to a position where the centre of gravity is positioned as far away from the rotational axis of the cylinder as possible, thereby causing them to cover and thus close the openings. However, when the speed is low or the rotation is stopped, the plates 15 tend to position themselves with the heavy bottom portions 16 pulled downward by gravity. If the rotation stops with the opening 12a, 12b at the top of the cylinder, the plate 15 hangs down as shown by dotted lines in Figure 2, thereby releasing the openings 12a from the valves 13a. Even when the plate 15 hangs down over an opening 12a, 12b there is provided a clearance between the plate 15 and the wall 4 to allow the communication therethrough when differential pressure is not acting on the plate.

When a film is to be placed on the cylinder 1 the film is wound around it by rotating the cylinder slowly, in each wall the opening which is positioned at the top of the cylinder 1, is released from the valves 13a, thereby allowing mutual communication between all the chambers No. 1 to No. 3. Although the interior pressure in the respective chambers is kept negative with respect to the pressure outside the cylinder 1, by means of the pump 5, the mutual communication makes the interior pressure of all the chamber No. 1 and No. 3 substantially equal. Under this equal suction the film is secured on the cylinder 1 by suction through the suction holes 2. When the film is secured, the cylinder is rotated faster, and the openings 12a and 12b are gradually closed by the valves 13a due to the centrifugal force generated by the rotation. However, the closure provided by the positions of valves 13a over the openings 12a, 12b is not perfectly airtight in itself for the reason below :

When the sheet of film is a full size sheet, the pressures in the respective chambers No. 1 to No. 3 are constant, thereby producing no differential pressure between chambers to bias the valves 13 into engagement with the walls 3, 4. This ensures the clearance between the valves 13 and the walls 3, 4 to keep the chamber pressure equal.

On the other hand, when the film is a half-size sheet, half of the area of the cylinder surface in which the suction holes 2 are provided, is not covered by the film. Air is admitted through these uncovered suctions holes 2 to communicate with the respective chamber of the cylinder 1. As a result the chambers not covered by the film, for example, the chambers No. 1 and No. 3, will have the same pressure as the atmospheric pressure, thereby producing a great difference in pressure compared with the pressure in chamber No. 2. This differential pressure, causes the swinging valves 13 to tightly pressed against the vertical walls 3, 4 so that air is not allowed to communicate from chamber to chamber through the closed openings 12a, 12b. This prevents the suction in the chamber No. 2 from being reduced.

The hollow extended portion 9a is provided with a check valve 17 which prevents a reduction of suction in the chambers which might occur because of an electric failure or any other fault. The check valve 17 may be replaced with a lead valve or a poppet valve. A labyrinth seal 18 is also provided in the hollow extended portion 9a.

Referring to Figure 3, there is shown another embodiment, in which a valve 13b comprises a flat plate 15b which is slidably supported in a guide frame 19 by means of a spring 20 which is in turn fixed to a clasp 14'. The plate 15b is biased by the spring 20 toward the rotation axis of the cylinder 1. The centrifugal force resulting from the fast rotation of the cylinder acts on the plate 15b overcoming the bias of the spring 20, so that the plate 15b is moved to the position covering the opening 12b. Thus the spring 20 is selected so as to enable the plate 15b to move as mentioned above under centrifugal force. Even when the plate 15b is moved to the corresponding position of the opening 12b, a clearance between the wall 4 and the plate 15b permits communication between the chambers unless the aforementioned differential pressure acts on the plate 15b to airtightly close the opening 12b by forcing the plate 15b against the wall 4.

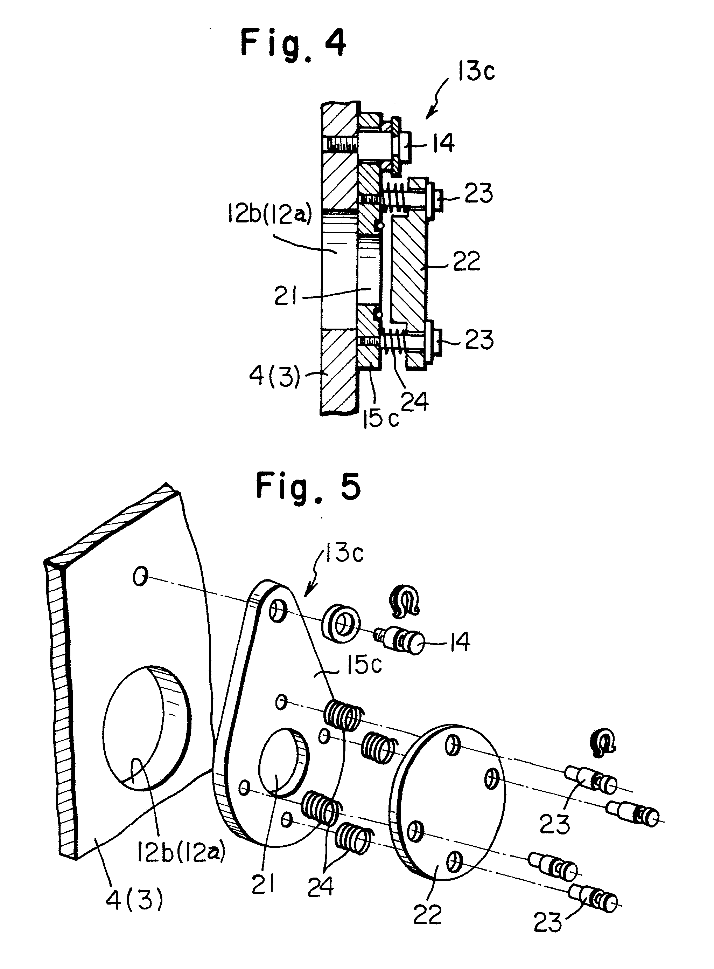

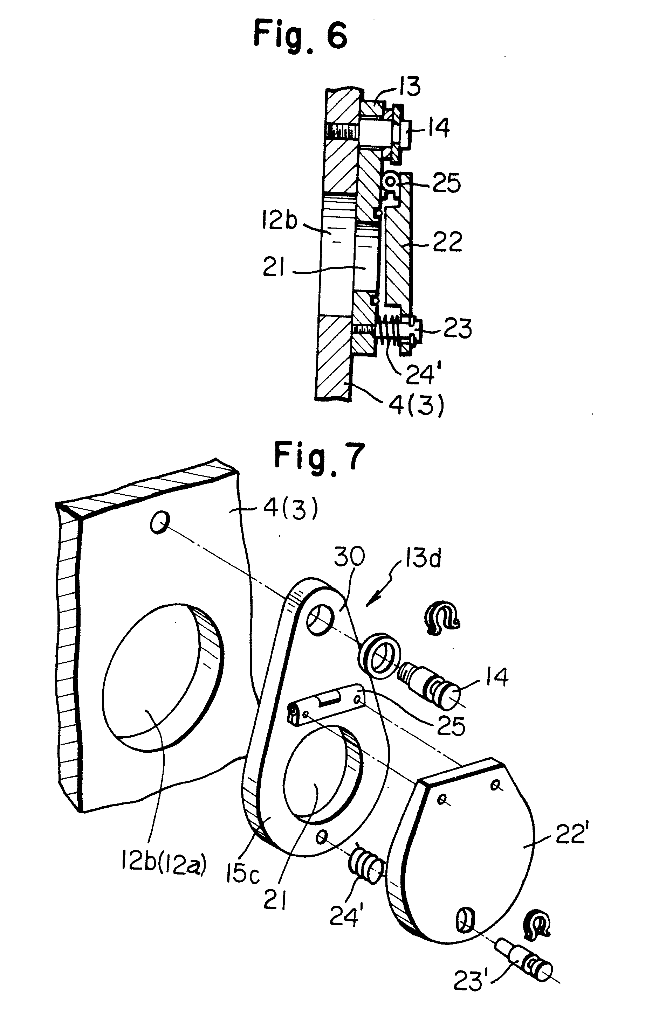

Referring to Figures 4 and 5 there is shown a further embodiment of the invention which is especially intended to ensure clearance between the valve 13c and the wall 4 when there is no aforemention differential pressure between the chambers, and also to prevent any air leak at the valve when the opening 12a, 12b is closed by means of the differential pressure. If an air leak occurs, suction sufficient to hold the film is not achieved, and the film is likely to slip off the cylinder under insufficient suction. This is because any air leak at the valves would equalize interior pressure through the chambers No. 1 to No. 3.

The valve as shown in Figures 4 and 5 is particularly effective in securing the film on the cylinder surface by reducing air leaks at the valves 13. Referring to Figures 4 and 5, the valve 13c comprises a fan-shaped plate 15c in which there is provided an opening 21, smaller in diameter than the opening 12b provided on the vertical wall 4. A disc plate 22 is mounted to the plate 15c by means of screws 23 so as to cover the opening 21. Between the plate 15c and the disc plate 22 we provided four springs 24 which bias the plate 22 away from the plate 15c when there is no differential pressure between the chambers. The fan-shaped plate 15c is rotatably mounted on the wall 4 by means of a screw 14 so that the openings 12b and 21 correspond with each other when the plate 15c is forced to a position covering the opening 12b by the centrifugal force of rotation of the cylinder 1. The springs 24 are selected so as to bias the disc plate 22 away from the plate 15c when there is no differential pressure between the chambers but so that this bias is overcome by such differential pressure when it occurs, so that the openings 12b and 21 are respectively airtightly closed by plates 15c and 22. Thus, relative negative pressure in a chamber, for example chamber No. 2, around which a film is placed, is strengthened and thus the film placed around the chamber No. 2 is fixedly secured on the cylinder surface.

Referring now to Figures 6 and 7, yet another embodiment of the present invention is shown, in which the valve 13d comprises a fan-shaped plate 15c, as shown in Figures 4 and 5, and a partially fan-shaped plate 22' which is pivotally mounted on the plate 15c by means of a hinge 25, the pivotal axis of which is normal to the rotational axis of the cylinder 1. The plate 22' is biased away from the plate 15c by means of a spring 24' when there is no differential pressure between the chambers. The clearance between the plates 15c and 22' is defined by a screw 23'. The fan-shaped plate 15c is rotatably mounted on the wall 4 by means of a screw 14 so that the openings 12b and 21 correspond with each other when centrifugal force acts on the valve 13d as the cylinder rotates. The spring 24' is selected so as to bias the partially fan-shaped plate 22' away from the plate 15c when there is no differential pressure between the chambers so that the bias is overcome by such differential pressure, when it occurs, so that the openings 12b and 21 are respectively airtightly closed by the plates 15c and 22'. Thus, relative negative pressure in a chamber for example chamber No. 2 around which a film is placed, is strengthened and thus the film placed around the chamber No. 2 is fixedly secured on the cylinder surface.

During use of a suction drum embodying the present invention, a film is first automatically supplied from an automatic film supply (not shown), while suction is created in the chambers No. 1 to No. 3 by the pump 5. The suction applied to the chambers is adjusted so as to hold the film on the cylinder surface thereby. As the cylinder 1 rotates slowly, the film is held onto and wound around the cylinder surface, during which communication between chambers No. 1 to No. 3 is maintained by either openings 12a or 12b, because there is no centrifugal force acting on the valves 13, and so the plates 15 merely rotate around shaft 14 under the influence of gravity. Once the film is placed on the cylinder surface, the rotation of the cylinder 1 is increased so as to be suitable for recording an image on the film by means of a recording head (not shown), during which rotation the centrifugal force created acts on the valves 13 causing all the valves to be positioned across the openings 12a and 12b.

When a full-size film is used, all the suction holes 2 on the cylinder surface are closed by the film, there is no differential pressure between the chambers No 1 to No 3, and thus the valves 13 are not airtightly closed but respective chambers No 1 to No 3 communicate through the clearance provided between the openings 12a, 12b and the respective valves 13. Therefore, the full-size film is fixedly secured on the cylinder surface during recording.

When a half-size film is used and is placed on the cylinder surface of chamber No. 2, for example, all the suction holes 2 of the chamber No. 2 are closed by the film while the suction holes 2 of the chambers Nos. 1 and 3 are left open to the air. Therefore, differential pressure between the chamber No. 2 and the chambers Nos. 1, 3 occurs, which differential pressure causes the clearance provided between the openings 12a, 12b and their respective valves 13 to be airtightly closed the thus, communication openings between the chamber No. 2 and the chamber Nos. 1, 3 are airtightly sealed, and so the half-size film is fixedly secured on the cylinder surface of the chamber No. 2.

As mentioned above, the rotary suction drum according to the present invention secures a sheet material fixedly and safely on the cylinder surface irrespective of the size of the sheet material. Furthermore, the fixing of the sheet material may be automatically performed.

The features disclosed in the foregoing description, in the following claims, and/or in the accompanying drawings may, both separately and in any combination thereof be material for realising the invention as claimed.

## Claims

1. A rotary suction drum for supporting sheet materials of different sizes, comprising a rotary cylinder (1) on the surface of which the sheet material is mounted in use of the suction drum, a wall (3) separating two chambers (No 1, No 2) within the cylinder, a conduit (11) opening into one (No 2) of the said chambers and connected to suction means (5) for applying suction to the one chamber, characterised by an opening (12a or 12b) provided in the wall, and a valve (13) selectively operable during rotation of the cylinder to place the chambers in communication or to isolate the chambers from one another depending upon the size of sheet material being used.

2. A rotary suction drum according to Claim 1, wherein two openings (12a and 12b) are provided in the wall (3) on opposite sides of the axis of rotation of the cylinder, and respective valves (13) are provided for controlling communication between the chambers (No 1, No 2) through the openings.

3. A rotary suction drum according to Claim 2, wherein each valve (13) is operable to cover the corresponding opening (12a, 12b) by centrifugal force resulting from rotation of the cylinder (1) and being urged towards the wall to close the corresponding opening in a substantially airtight manner by differential pressure between the two chambers.

4. A rotary suction drum according to Claim 3, wherein at least one of the valves (13) comprises a first plate (15) movably mounted on the walls, the first plate (15) being movable to cover the corresponding opening (12a, 12b) by the centrifugal force produced by the rotation of the cylinder (1).

5. A rotary suction drum according to Claim 4 wherein the said at least one valve (13) further comprises a valve opening (21) positioned in the first plate (15) so that when the first plate (15) covers the corresponding opening (12a, 12b) the valve opening (21) and the corresponding opening (12a, 12b) overlie, a second plate (22) provided on the first plate (15) covering the valve opening (21) and biasing means (24) for biasing the second plate (22) away from the first plate (15) said second plate (22) being urgeable towards the first plate (13) by the differential pressure to close the valve opening (21) in a substantially airtight manner.

6. A rotary suction drum according to Claim 5, wherein the first plate is (15) rotatably secured to the wall (3) by means of a shaft (14).

7. A rotary suction drum according to Claim 6 wherein the first plate (15) is weighted at the portion (16) furthest from the shaft (14).

8. A rotary suction drum according to claim 6 or 7 wherein the first plate (15) is fan shaped.

9. A rotary suction drum according to claim 4 or 5 wherein the first plate (15b) is slidably secured to the wall (3) and valve biasing means (20) is provided for biasing the first plate (15b) away from the corresponding opening (12a, 12b).

10. A rotary suction drum according to Claim 9 wherein the said at least one valve (13b) further comprises guide means (19) for directing the sliding of the first plate (15b).

## Patentansprüche

1. Saugdrehtrommel zum Tragen von Blättern unterschiedlicher Größe, mit einem Drehzylinder (1), auf dessen Oberfläche das Blatt bei Verwendung der Saugtrommel befestigt ist, einer Wand (3), die die beiden Kammern (Nr. 1, Nr. 2) in dem Zylinder trennt, einer sich in die eine (Nr. 2) der Kammern öffnende und mit einer Saugeinrichtung (5) zum Aufbringen von Saugkraft auf die eine der Kammern verbundene Leitung (11), gekennzeichnet durch eine in der Wand (3) angeordnete Öffnung (12a oder 12b), ein während der Drehung des Zylinders wahlweise zu betätigendes Ventil (13) zum Herstellen einer Kommunikation zwischen den Kammern oder zum Trennen der Kammern voneinander in Abhängigkeit von der Größe des verwendeten Blatts.

2. Saugdrehtrommel nach Anspruch 1, wobei die beiden Öffnungen (12a und 12b) in der Wand (3) an gegenüberliegenden Seiten der Drehachse des Zylinders angeordnet sind und jeweils Ventile (13) vorgesehen sind zur Steuerung der Kommunikation zwischen den Kammern (Nr. 1, Nr. 2) durch die Öffnungen.

3. Saugdrehtrommel nach Anspruch 2, wobei jedes Ventil (13) zum Abdecken der jeweiligen Öffnung (12a, 12b) durch Zentrifugalkraft, die sich aus der Drehung des Zylinders (1) ergibt, eingerichtet ist und gegen die Wand gezwungen wird zum Verschließen der jeweiligen Öffnung im wesentlichen luftdicht durch einen Differenzdruck zwischen den beiden Kammern.

4. Saugdrehtrommel nach Anspruch 3, wobei wenigstens eines der Ventile (13) eine erste Platte (15), die beweglich an den Wänden befestigt ist, aufweist, und die erste Platte (15) durch die durch Drehung des Zylinders (1) ausgeübte Zentrifugalkraft beweglich ist, um die entsprechende Öffnung (12a, 12b) abzudecken.

5. Saugdrehtrommel nach Anspruch 4, wobei das wenigstens eine Ventil (13) weiter eine Ventilöffnung (21) aufweist, die in der erste Platte (15) angeordnet ist, so daß die Ventilöffnung (21) und die entsprechende Öffnung (12a, 12b) einander überlappen, wenn die erste Platte (15) die entsprechende Öffnung (12a, 12b) abdeckt, eine zweite Platte (22) auf der ersten Platte (15) die Ventilöffnung (21) abdeckend vorgesehen ist, und Vorspannmittel (24) zum Vorspannen der zweiten Platte (22) weg von der ersten Platte (15), wobei die zweite Platte (22) gegen die erste Platte (15) durch den Differenzdruck gedrückt werden kann, um die Ventilöffnung (21) im wesentlichen luftdicht zu verschließen.

6. Saugdrehtrommel nach Anspruch 5, wobei die erste Platte (15) an der Wand (3) mittels eines Bolzens (14) drehbar an der Wandung (3) befestigt ist.

7. Saugdrehtrommel nach Anspruch 6, wobei die erste Platte (15) an dem von dem Bolzen (14) am weitestens entfernten Abschnitt (16) beschwert ist.

8. Saugdrehtrommel nach Anspruch 6 oder 7, wobei die erste Platte (15) blattförmig ausgebildet ist.

9. Saugdrehtrommel nach Anspruch 4 und Anspruch 5, wobei die erste Platte (15b) gleitfähig an der Wand (3) befestigt ist und das Ventil vorspannende Mittel (20) vorgesehen sind, um die erste Platte (15b) von der entsprechenden Öffnung (12a, 12b) weg vorzuspannen.

10. Saugdrehtrommel nach Anspruch 9, wobei das wenigstens eine Ventil (13b) weiter eine Führung (19) zum Ausrichten des Gleitens der ersten Platte (15b).

**Revendications**

1. Tambour aspirant rotatif pour supporter des matériaux en feuille de différentes dimensions, comprenant un cylindre rotatif (1) sur la surface duquel le matériau en feuille est monté à l'utilisation du tambour rotatif, une cloison (3) séparant deux chambres (N° 1 et N° 2) dans le cylindre, un conduit (11) débouchant dans l'une (N° 2) desdites chambres et raccordé à des moyens d'aspiration (5) pour appliquer l'aspiration à ladite chambre, caractérisé par une ouverture (12a ou 12b) ménagée dans la cloison, et un clapet (13) actionnable sélectivement pendant la rotation du cylindre pour mettre les chambres en communication ou pour isoler les chambres l'une de l'autre, selon la dimension du matériau en feuille utilisé.

2. Tambour aspirant rotatif selon la revendication 1, dans lequel deux ouvertures (12a et 12b) sont ménagées dans la cloison (3) sur des côtés opposés de l'axe de rotation du cylindre et des clapets (13) respectifs sont prévus pour commander la communication entre les chambres (N° 1, N° 2) par les ouvertures.

3. Tambour aspirant rotatif selon la revendication 2, dans lequel chaque clapet (13) est actionnable pour couvrir les ouvertures correspondantes (12a, 12b) par la force centrifuge résultant de la rotation du cylindre (1) et étant rappelé vers la cloison pour fermer l'ouverture correspondante d'une manière sensiblement étanche à l'air par pression différentielle entre les deux chambres.

4. Tambour aspirant rotatif selon la revendication 3, dans lequel au moins un des clapets (13) comprend une première plaque (15) montée mobile sur les cloisons, la première plaque (15) étant mobile pour couvrir l'ouverture correspondante (12a, 12b) par la force centrifuge produite par la rotation du cylindre (1).

5. Tambour aspirant rotatif selon la revendication 4, dans lequel ledit « au moins un » clapet (13) comprend, en outre, une ouverture de clapet (21) située dans la première plaque (15) de manière que, lorsque la première plaque (15) recouvre l'ouverture correspondante (12a, 12b), l'ouverture de clapet (21) et l'ouverture correspondante (12a, 12b) soient superposées, une seconde plaque (22) prévue sur la première plaque (15) couvrant l'ouverture de clapet (21) et des moyens de rappel (24) pour écarter la seconde plaque (22) de la première plaque (15), ladite seconde plaque (22) étant rappelable vers la première plaque (15) par la pression différentielle pour fermer l'ouverture de clapet (21) de manière sensiblement étanche à l'air.

6. Tambour aspirant rotatif selon la revendication 5, dans lequel la première plaque (15) est fixée sur la cloison (3), de manière à pouvoir tourner, au moyen d'un arbre (14).

7. Tambour aspirant rotatif selon la revendication 6, dans lequel la première plaque (15) est lestée dans la zone (16) la plus éloignée de l'arbre (14).

8. Tambour aspirant rotatif selon la revendication 6 ou 7, dans lequel la première plaque (15) est en forme de ventilateur.

9. Tambour aspirant rotatif selon la revendication 4 ou 5, dans lequel la première plaque (15b) est montée coulissante sur la cloison (3) et un moyen de rappel de clapet (20) est prévu pour écarter la première plaque (15) de l'"ouverture correspondante (12a, 12b).

10. Tambour aspirant rotatif selon la revendication 9, dans lequel ledit « au moins un » clapet (13b) comprend en outre un moyen de guidage (19) pour diriger le coulissement de la première plaque (15b).

# Fig. 1

# Fig. 2

# Fig. 3

# Fig. 4

# Fig. 5

# Fig. 6

# Fig. 7

# Fig. 8